# EUROPÄISCHE PATENTANMELDUNG

(11) **EP 1 694 068 A1**
(43) Veröffentlichungstag der Anmeldung: **23.08.2006**
(21) Anmeldenummer: 05003593.0
(22) Anmeldetag: 18.02.2005
(51) Int. Cl.: H04N 7/16, H04H 1/00

(54) **System zum Kopieren von Streaming-Daten**

(71) Anmelder: IFS Informationstechnik GmbH, 81671 München (DE)
(72) Erfinder: Frey, Thomas, 85560 Ebersberg (DE); Stulle, Markus, 80797 München (DE)
(74) Vertreter: Joppich, Martin

(57) **Zusammenfassung**

Die Erfindung betrifft ein System, ein Verfahren und eine Steuereinheit zum Kopieren von auf einem Streaming-Server abgespeicherten Streaming-Daten, die jeweils anhand einer zugehörigen Daten-ID adressierbar sind. Um ein möglichst kostengünstiges System zum Abspeichern bzw. zum Kopieren von Streaming-Daten bereitzustellen, umfasst das erfindungsgemäße System einen Rundfunk-Sender zum Aussenden von Streaming-Daten zusammen mit der jeweils zugehörigen Daten-ID, einen Rundfunk-Empfänger zum Empfangen der von dem Rundfunk-Sender ausgesendeten Streaming-Daten einschließlich der jeweils zugehörigen Daten-ID, und eine Steuereinheit, wobei die Steuereinheit eine erste Schnittstelle zum Rundfunk-Empfänger, eine zweite Schnittstelle zum Streaming-Server und eine Befehlseinheit zum Erzeugen eines Kopierbefehls umfasst, und wobei die Befehlseinheit bei Vorliegen eines Steuersignals einen Kopierbefehl auf der Grundlage einer dem Steuersignal zugeordneten und über die erste Schnittstelle übermittelten Daten-ID sowie auf der Grundlage einer der Befehlseinheit zugeführten Befehls-ID erzeugt und den auf diese Weise erzeugten Kopierbefehl über die zweite Schnittstelle zum Starten eines Kopiervorgangs an den Streaming-Server übermittelt.

## Beschreibung

Die Erfindung betrifft ein System, ein Verfahren und eine Steuereinheit zum Kopieren von auf einem Streaming-Server abgespeicherten Streaming-Daten, die jeweils anhand einer zugehörigen Daten-ID adressierbar sind.

Unter Streaming versteht man die kontinuierliche Übertragung von digitalen Daten über ein Netzwerk, z.B. über das Internet. Mit der Entwicklung der MPEG-Datenreduktionsverfahren ist es möglich geworden, Audio-und Videosequenzen auf der Grundlage der zur Verfügung stehenden Bandbreiten der vorhandenen Netzwerke in Echtzeit, d.h. ohne Zeitverlust, zu übertragen. Hierdurch sind Anwendungen wie das digitale Radio oder das digitale Fernsehen oder aber auch die Internet-Telefonie möglich geworden.

Es sind DAB-Radioempfänger (DAB = Digital Audio Broadcasting) bekannt, die mit einem digitalen Speicher und einem entsprechenden Dekoder ausgerüstet sind, um die empfangenen Streaming Daten auf Wunsch im so genannten MP3-Format abspeichern zu können. Zu dem gleichen Zweck sind auch bereits analoge Radioempfänger mit einem digitalen Speicher ausgerüstet worden, wobei dann die dekodierten Analogsignale zusätzlich noch einem Analog-Digitalwandler zugeführt werden müssen, bevor diese digital abgespeichert werden können.

In entsprechender Weise sind auch Mobiltelefone bekannt, die mit einer MP3-Funktion ausgestattet sind, um Streaming-Daten, insbesondere digitale Audiodaten, aus dem Internet herunter zu laden. Die Audiodaten können dabei entweder von einer von dem Benutzer aufgerufenen Internet-Seite herunter geladen werden oder per E-Mail an das Gerät gesandt werden.

Die genannten Radioempfänger und Mobiltelefone erfordern insgesamt zum Abspeichern bzw. Kopieren von Streaming-Daten das Zusammenwirken technisch aufwendiger Komponenten und sind damit gegenüber herkömmlichen Radioempfängern und Mobiltelefonen sehr kostenaufwendig.

Aufgabe der Erfindung ist es deshalb, eine möglichst kostengünstige Vorrichtung und ein möglichst kostengünstiges Verfahren zum Abspeichern bzw. zum Kopieren von Streaming-Daten bereitzustellen.

Diese Aufgabe wird durch ein System nach Anspruch 1, eine Steuereinheit nach Anspruch 10 und ein Verfahren nach Anspruch 11 gelöst.

Das erfindungsgemäße System zum Kopieren von auf einem Streaming-Server abgespeicherten Streaming-Daten, die jeweils anhand einer zugehörigen Daten-ID adressierbar sind, umfasst einen Rundfunk-Sender zum Aussenden von Streaming-Daten zusammen mit der jeweils zugehörigen Daten-ID, einen Rundfunk-Empfänger zum Empfangen der von dem Rundfunk-Sender ausgesendeten Streaming-Daten einschließlich der jeweils zugehörigen Daten-ID, und eine Steuereinheit, wobei die Steuereinheit eine erste Schnittstelle zum Rundfunk-Empfänger, eine zweite Schnittstelle zum Streaming-Server und eine Befehlseinheit zum Erzeugen eines Kopierbefehls umfasst, und wobei die Befehlseinheit bei Vorliegen eines Steuersignals einen Kopierbefehl auf der Grundlage einer dem Steuersignal zugeordneten und über die erste Schnittstelle übermittelten Daten-ID sowie auf der Grundlage einer der Befehlseinheit zugeführten Befehls-ID erzeugt und den auf diese Weise erzeugten Kopierbefehl über die zweite Schnittstelle zum Starten eines Kopiervorgangs an den Streaming-Server übermittelt.

Die erfindungsgemäße Steuereinheit zum Kopieren von auf einem Streaming-Server abgespeicherten Streaming-Daten, die jeweils anhand einer zugehörigen Daten-ID adressierbar sind, umfasst eine erste Schnittstelle zu einem Rundfunk-Empfänger, über den von einem Rundfunk-Sender ausgesendete Streaming-Daten einschließlich der jeweils zugehörigen Daten-ID empfangbar sind, eine zweite Schnittstelle zum Streaming-Server und eine Befehlseinheit zum Erzeugen eines Kopierbefehls, wobei durch die Befehlseinheit bei Vorliegen eines Steuersignals ein Kopierbefehl auf der Grundlage einer dem Steuersignal zugeordneten und über die erste Schnittstelle übermittelten Daten-ID sowie auf der Grundlage einer der Befehlseinheit zugeführten Befehls-ID erzeugbar ist und wobei der auf diese Weise erzeugte Kopierbefehl über die zweite Schnittstelle an den Streaming-Server zum Starten eines Kopiervorgangs übermittelbar ist.

Das erfindungsgemäße Verfahren zum Kopieren von auf einem Streaming-Server abgespeicherten Streaming-Daten, die jeweils anhand einer zugehörigen Daten-ID adressierbar sind, macht von einer Steuereinheit Gebrauch, die eine erste Schnittstelle zu einem Rundfunk-Empfänger, eine zweite Schnittstelle zum Streaming-Server und eine Befehlseinheit zum Erzeugen eines Kopierbefehls umfasst, wobei von dem Rundfunk-Sender Streaming-Daten zusammen mit der jeweils zugehörigen Daten-ID ausgesendet werden, von dem Rundfunk-Empfänger die von dem Rundfunk-Sender ausgesendeten Streaming-Daten einschließlich der jeweils zugehörigen Daten-ID empfangen werden, und von der Befehlseinheit bei Vorliegen eines Steuersignals ein Kopierbefehl auf der Grundlage einer dem Steuersignal zugeordneten und über die erste Schnittstelle übermittelten Daten-ID sowie auf der Grundlage einer der Befehlseinheit zugeführten Befehls-ID erzeugt wird und der auf diese Weise erzeugte Kopierbefehl über die zweite Schnittstelle zum Starten eines Kopiervorgangs an den Streaming-Server übermittelt wird.

Die erfindungsgemäße Lösung beruht auf der Erkenntnis, die von dem Rundfunk-Sender ausgesendeten und von einem Rundfunk-Empfänger empfangenen Streaming-Daten nicht direkt im jeweiligen Rundfunk-Empfänger abzuspeichern, sondern vielmehr die Daten-ID der empfangenen und zu kopierenden Streaming-Daten mit einer systemweit eindeutigen und dem Rundfunk-Empfänger bzw. der Steuereinheit zugeführten Befehls-ID zu verknüpfen, um diese derart verknüpfte und komprimierte Information dann im Rahmen eines Kopierbefehls an den Streaming-Server weiterzuleiten. Da dem Streaming-Server die Streaming-Daten ebenfalls zur Verfügung stehen, kann der Streaming-Server anhand der Daten-ID unmittelbar auf die zu kopierenden Streaming-Daten zugreifen. Aufgrund der Befehls-ID verfügt der Streaming-Server außerdem über die notwendigen Informationen darüber, wohin, wie und wann die Streaming-Daten kopiert werden sollen und gegenüber welcher Stelle gegebenenfalls die Kosten für den Kopiervorgang berechnet werden sollen. Vorzugsweise wird der Streaming-Server hierbei über eine Datenbank verfügen, in der zu jeder Befehls-ID die entsprechenden Datensätze für die Kopieradresse (z.B. eine E-Mail Adresse) sowie für die Art der Abrechnung hinterlegt sind.

Die Befehls-ID kann in der jeweiligen Steuereinheit fest abgespeichert oder über eine dafür vorgesehene Schnittstelle von außen zugeführt werden. Entscheidend hinsichtlich der Befehls-ID ist lediglich die Tatsache, dass anhand der Befehls-ID der durch die Befehlseinheit erzeugte Kopierbefehl und damit auch der Kopiervorgang für den Streaming-Server individualisierbar ist.

Nach einer bevorzugten Ausführungsform ist vorgesehen, dass der Rundfunk-Sender auszusendende Streaming-Daten von dem Streaming-Server herunterlädt. Hiermit kann im erfindungsgemäßen System ein gemeinsam genutzter Streaming-Server bereitgestellt zu werden.

Nach einer weiteren bevorzugten Ausführungsform ist vorgesehen, dass der Rundfunk-Sender auszusendende Streaming-Daten von einem von dem Streaming-Server unabhängig betriebenen Rundfunk-Server herunterlädt. Der Rundfunk-Server stellt hierbei einen weiteren Streaming-Server dar, der es wiederum ermöglicht, dass der Rundfunk-Sender vom Streaming-Server unabhängig betrieben wird.

Nach einer weiteren bevorzugten Ausführungsform ist vorgesehen, dass die Streaming-Daten aus DAB-Daten bestehen. DAB bezeichnet den Standard für das digitale Radio (Digital Audio Broadcast). Dementsprechend besteht der Rundfunk-Empfänger dann aus einem digitalen Empfangsgerät mit einem DAB-Dekoder. Die erfindungsgemäße Steuereinheit kann hierbei in dem digitalen Empfangsgerät direkt integriert sein, wobei die erste Schnittstelle mit dem DAB-Dekoder verbunden ist. Vorzugsweise ist es aber auch denkbar, die erfindungsgemäße Steuereinheit als Zusatzgerät für handelsübliche DAB-Radios bereitzustellen. Um auch für die zweite Schnittstelle bereits bestehende Komponenten zu verwenden, kann die zweite Schnittstelle beispielsweise über eine Blue-Tooth-Verbindung mit einem Mobiltelefon realisiert werden.

Nach einer weiteren bevorzugten Ausführungsform ist vorgesehen, dass das Steuersignal durch eine von einem Benutzer bedienbare Taste ausgelöst wird. Damit ist es einem Benutzer möglich, beim Empfangen von Streaming-Daten spontan zu entscheiden, ob er diese Streaming-Daten für eigene Zwecke kopieren und damit für sich dauerhaft abspeichern möchte.

Nach einer weiteren bevorzugten Ausführungsform ist vorgesehen, dass das Steuersignal durch eine Vergleichseinheit aufgrund vorgegebener Kriterien hinsichtlich der über die erste Schnittstelle übermittelten Daten-IDs automatisch ausgelöst wird. Auf diese Weise ist es wiederum möglich, beim Empfangen von Streaming-Daten bestimmte Kriterien vorzugeben, nach denen Streaming-Daten für eigene Zwecke kopiert und dauerhaft abgespeichert werden. Als Kriterien können beispielsweise der Interpret oder der Titel eines Musikstücks dienen.

Nach einer weiteren bevorzugten Ausführungsform ist vorgesehen, dass beim Starten des Kopiervorgangs die der jeweiligen Daten-ID zugeordneten Streaming-Daten vom Streaming-Server auf ein der jeweiligen Befehls-ID zugeordnetes Internet-Konto kopiert werden.

Im Folgenden wird die Erfindung anhand verschiedener Ausführungsbeispiele mit Bezug auf die beiliegenden Zeichnungen näher erläutert. Es zeigen:
- Fig. 1:: ein Blockschaltbild eines bekannten DAB-Systems (Stand der Technik),
- Fig. 2:: ein Blockschaltbild eines bekannten Rundfunk-Empfängers mit digitalem Speicher (Stand der Technik),
- Fig. 3:: ein Blockschaltbild eines ersten Ausführungsbeispiels des erfindungsgemäßen Systems,
- Fig. 4:: ein Blockschaltbild eines zweiten Ausführungsbeispiels des erfindungsgemäßen Systems und
- Fig. 5:: ein Blockschaltbild mit der Abfolge der einzelnen Verfahrensschritte gemäß dem zweiten Ausführungsbeispiel des erfindungsgemäßen Systems.

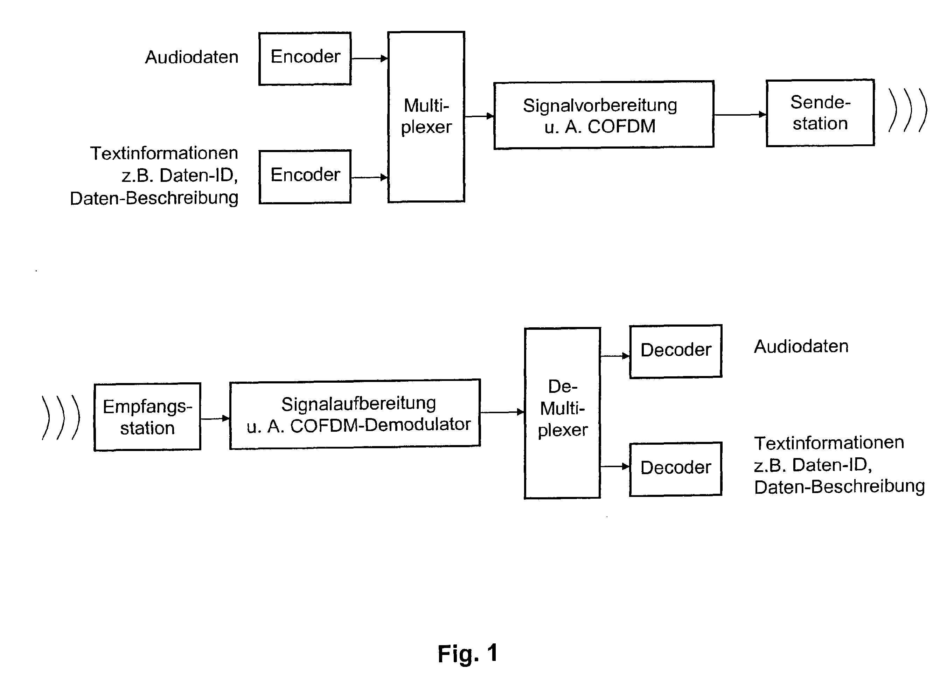

Fig. 1 zeigt ein Blockschaltbild eines bekannten DAB-Systems (Stand der Technik), dessen Standard durch das Eureka-147 Konsortium festgelegt wurde. Der DAB-Standard sieht vor, dass neben der Übertragung der eigentlichen Audiodaten auch Textinformationen übertragen werden können. Dabei wird zwischen programmbegleitenden und programmunabhängigen Informationen unterschieden. Gewöhnlich werden programmbegleitende Informationen genutzt, um Informationen über das gerade übertragene Musikstück bzw. das entsprechende Album zu übermitteln, während programmunabhängige Informationen genutzt werden, um z.B. Informationen über die aktuelle Verkehrs- oder Wetterlage zu übermitteln.

Diese Möglichkeiten können von dem erfindungsgemäßen System genutzt werden, um die jeweiligen Daten-IDs der gerade übertragenen Streaming-Daten sowie Angaben zur Kopiermöglichkeit als Textinformation zu übermitteln.

Entscheidend ist dabei, dass diese zusätzlich übertragenen Textinformationen für den Benutzer nicht störend sind, da sie nicht zwingend wahrgenommen werden müssen. Der RadioEmpfänger des Benutzers kann jedoch eine Anzeigevorrichtung zum Darstellen dieser Textinformationen aufweisen.

Im Folgenden wird der Sendevorgang eines DAB-Radios beschrieben. Die Audio- und Textdaten des DAB-Senders werden von mehreren Radioprogrammen mittels eines Multiplexers zu einem Datenstrom zusammengefasst und beispielsweise mit dem so genannten Coded Orthogonal Frequency Division Multiplexing (COFDM) Verfahren moduliert. Dabei wird der Datenstrom wiederum in Teilinformationen aufgeteilt, die in einem Frequenzbereich gemeinsam übertragen werden. Dies führt dazu, dass bei Störungen einzelner Signale bzw. dem Verlust der entsprechenden Teilinformationen diese Daten anhand der übrigen Teilinformationen errechnet werden können.

Im Rundfunk-Empfänger werden zunächst alle Signale zusammengefasst und die einzelnen Programme wieder getrennt. Anschließend können die übertragenen Textinformation von den Audiodaten getrennt und eine Dekodierung der Audio- und Textdaten durchgeführt werden. In einem letzten Schritt werden die digitalen Audiodaten in analoge Audiosignale umgewandelt.

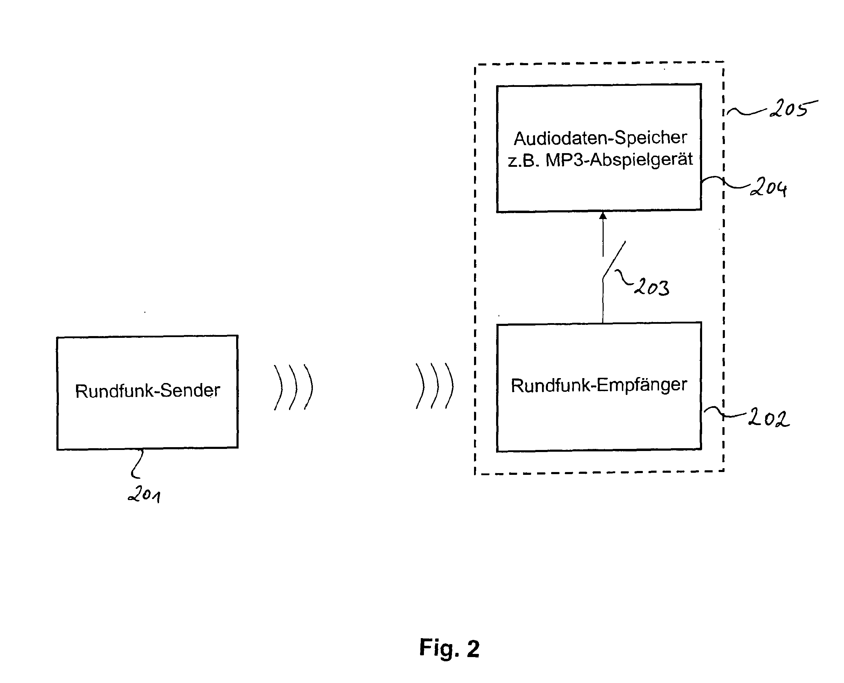

Fig. 2 zeigt ein Blockschaltbild eines bekannten Rundfunk-Empfängers mit digitalem Speicher (Stand der Technik). Der Rundfunk-Empfänger 202 empfängt die Audiodaten des Rundfunk-Senders 201 (analog oder digital). Wenn ein entsprechender Schalter 203 betätigt wird, werden die empfangenen Audiodaten zusätzlich in dem Audiodaten-Speicher 204 abgespeichert. Dieser Schalter muss stets durch den Benutzer betätigt werden. Bei einem erneuten Betätigen des Schalters 203 wird der Aufnahmevorgang wieder beendet. Es ist möglich, dass der Rundfunk-Empfänger 202 und der Audiodaten-Speicher 204 innerhalb einer Vorrichtung 205 untergebracht sind.

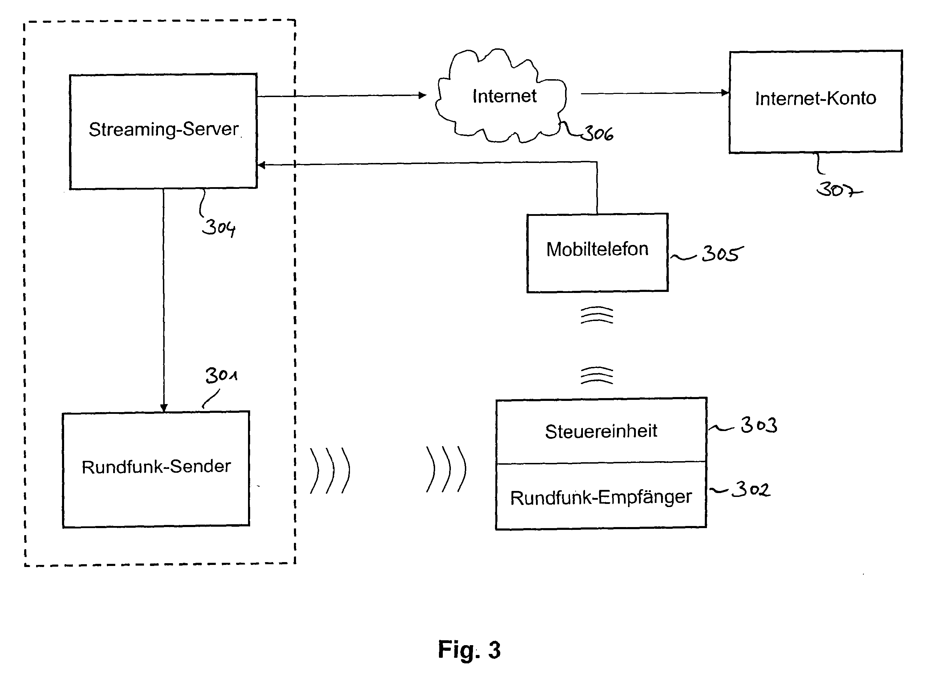

Fig. 3 zeigt ein Blockschaltbild eines ersten Ausführungsbeispiels des erfindungsgemäßen Systems. Ein Rundfunk-Sender 301 sendet die Streaming-Daten sowie die jeweiligen Daten-IDs aus. Diese Daten werden von mindestens einem Rundfunk-Empfänger 302 empfangen. Der Rundfunk-Empfänger 302 kann beispielsweise für den Betrieb in Fahrzeugen konzipiert sein oder es kann sich um einen tragbaren Rundfunk-Empfänger oder auch um einen in einem PC integrierten Rundfunk-Empfänger handeln. Erfindungsgemäß ist es möglich, dass der Rundfunk-Empfänger 302 des Benutzers eine Anzeigevorrichtung aufweist, um neben den empfangenen Streaming-Daten die jeweiligen Daten-IDs bzw. weitere Textinformationen darzustellen.

Der Rundfunk-Empfänger 302 ist mit einer Steuereinheit 303 verbunden. Sobald das notwendige Steuersignal zum Kopieren von Streaming-Daten vorliegt, erzeugt die in der Steuereinheit integrierte Befehlseinheit einen Kopierbefehl. Die Steuereiriheit 303 kann Bestandteil des Rundfunk-Empfängers 302 sein. In diesem Fall kann es sich bei dem Rundfunk-Empfänger 302 um ein für die Durchführung des erfindungsgemäßen Kopierens von Streaming-Daten konzipiertes Gerät handeln. Es ist jedoch auch möglich, insbesondere, wenn es sich bei dem Rundfunk-Empfänger 302 um eine Erweiterungskarte zum Einbau in einen PC handelt, dass die Steuereinheit 303 teilweise oder vollständig durch entsprechende Software ausgeführt wird. Es ist auch möglich, dass die Steuereinheit 303 durch ein separates Gerät realisiert wird, das mit dem Rundfunk-Empfänger 302 kommuniziert. Die erste Schnittstelle zum Rundfunk-Empfänger sowie die zweite Schnittstelle zum Streaming-Server sind je nach Anordnung der Steuereinheit dann in geeigneter Weise vorzusehen.

Falls der Benutzer eine Kopie von gerade durch den Rundfunk-Empfänger 302 empfangenen Streaming-Daten erhalten möchte, kann er direkt ein Steuersignal, beispielsweise durch Betätigen eines Schalters oder einer Taste, an die Steuereinheit 303 abgeben. Es ist jedoch auch möglich, dass ein Steuersignal automatisch durch eine Vergleichseinheit erzeugt wird. Dies ist denkbar, wenn der Benutzer Kopien von Streaming-Daten, gekennzeichnet durch vorgegebene Kriterien, erhalten möchte. In diesem Fall kann die Daten-ID neben der eindeutigen Adressinformation der Streaming-Daten weitere Angaben zu Kriterien wie beispielsweise Titel oder Erscheinungsjahr beinhalten. Falls eine Vergleichseinheit eine Übereinstimmung mit von dem Benutzer eingegebenen Daten bestimmter Kriterien und Daten bestimmter Kriterien der gerade vom dem Rundfunk-Empfänger empfangenen Streaming-Daten feststellt, wird ein Steuersignal an die Steuereinheit gesandt.

Bei Vorliegen eines Steuersignals wird eine Kopierinformation von der Steuereinheit 303 an den Streaming-Server 304 übermittelt. Diese Kopierinformation enthält wenigstens eine Daten-ID sowie eine Befehls-ID. Die Daten-ID, die eine eindeutige Adressierung der von dem Benutzer gewünschten Streaming-Daten ermöglicht, entspricht der Daten-ID der von dem Rundfunk-Empfänger empfangenen Streaming-Daten, bei denen ein Steuersignal erzeugt wurde. Die Befehls-ID enthält Angaben, die eine eindeutige Identifikation des Benutzers ermöglichen.

Die Übermittlung dieser Kopierinformationen erfolgt vorteilhafterweise über eine Kommunikationsverbindung eines handelsüblichen Mobiltelefons. So kann in einem ersten Schritt eine Übermittlung des Kopierbefehls von der Steuereinheit 303 mittels einer Funkverbindung, z.B. nach dem Bluetooth-Standard, zu einem separaten Mobiltelefon 305 erfolgen und dann zu dem Streaming-Server 304 übermittelt werden. Selbstverständlich sind auch andere Übertragungsmöglichkeiten zwischen der Steuereinheit und dem Streaming-Server denkbar. So kann das Mobiltelefon 305 auch Teil der Steuereinheit 303 sein. Falls die Steuereinheit 303 durch Software realisiert wurde, die auf einem PC abläuft, kann vorteilhafterweise auf eine Internetverbindung zwischen diesem PC und dem Streaming-Server zurückgegriffen werden.

Aufgrund der eindeutigen Daten-ID ist es für den Streaming-Server 304 möglich, die von dem Benutzer gewünschten Streaming-Daten eindeutig zu adressieren. Die gewünschten Kopien können aufgrund der ebenfalls übermittelten Befehls-ID über das Internet 306 auf das Internet-Konto 307 des entsprechenden Benutzers übertragen werden. Das Internet-Konto 307 kann beispielsweise ein E-Mail Konto oder eine spezielle Internet-Seite sein.

Der in Fig. 3 dargestellte Rundfunk-Empfänger 301 verbreitet Streaming-Daten, die direkt von dem Streaming-Server abgerufen werden. Dabei können die Streaming-Daten ohne Zwischenspeicherung direkt von dem Rundfunk-Sender 301 verbreitet werden oder kurzzeitig innerhalb des Rundfunk-Senders 301 zwischengespeichert werden. Es ist natürlich auch möglich, dass der Streaming-Server 304 Teil des Rundfunk-Senders 301 ist.

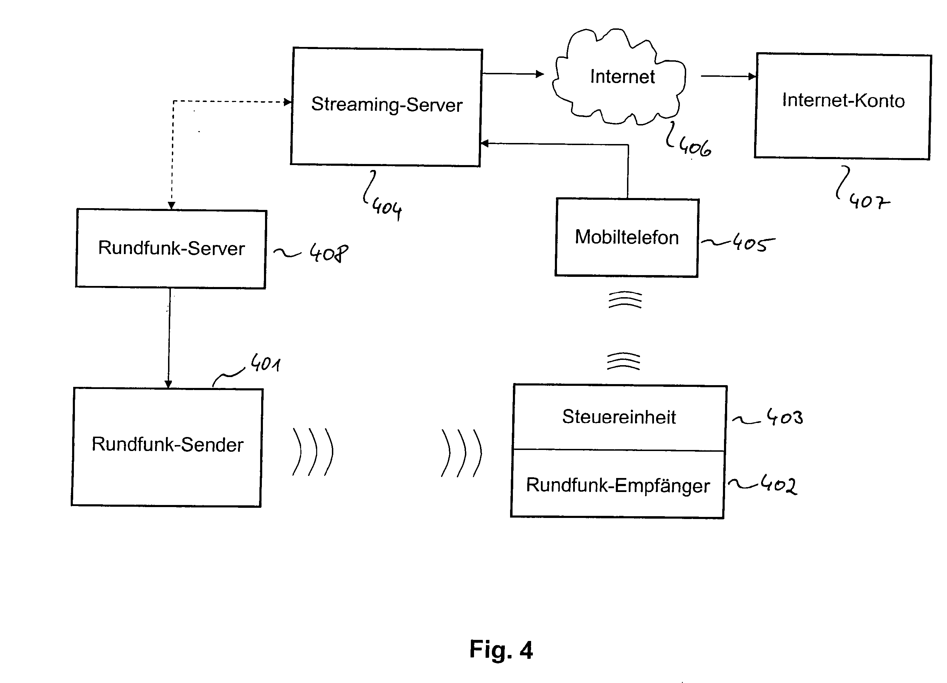

Fig. 4 zeigt ein Blockschaltbild eines zweiten Ausführungsbeispiels des erfindungsgemäßen Systems. Im Unterschied zu Fig. 3 ruft der Rundfunk-Sender 401 die auszusendenden Streaming-Daten nicht von dem Streaming-Server 404, sondern von einem separaten Rundfunk-Server 408 ab. Eine Kommunikation zwischen dem Streaming-Server 401 und dem Rundfunk-Server 408 erfolgt lediglich, um die Kopiermöglichkeit der Streaming-Daten zwischen beiden Servern abzugleichen. Dazu sendet der Rundfunk-Server 408 eine Liste mit Streaming-Daten an den Streaming-Server 404. Dieser ergänzt die Liste im Hinblick auf die Kopiermöglichkeit der einzelnen Streaming-Daten und sendet die Liste an den Rundfunk-Server 408 zurück. Aufgrund der eindeutigen Adressierbarkeit von Streaming-Daten durch die jeweiligen Daten-IDs genügt für diesen Informationsaustausch eine Liste mit den entsprechenden Daten-IDs. Die Streaming-Daten des Rundfunk-Servers 489 und des Streaming-Servers 404 können dabei grundsätzlich auch aus unterschiedlichen Quellen stammen.

Die übrigen Komponenten 401 bis 407 entsprechen den Komponenten 301 bis 307 gemäß Fig. 3, so dass hinsichtlich dieser Komponenten mit dem entsprechenden Informationsablauf auf die obige Beschreibung verwiesen wird.

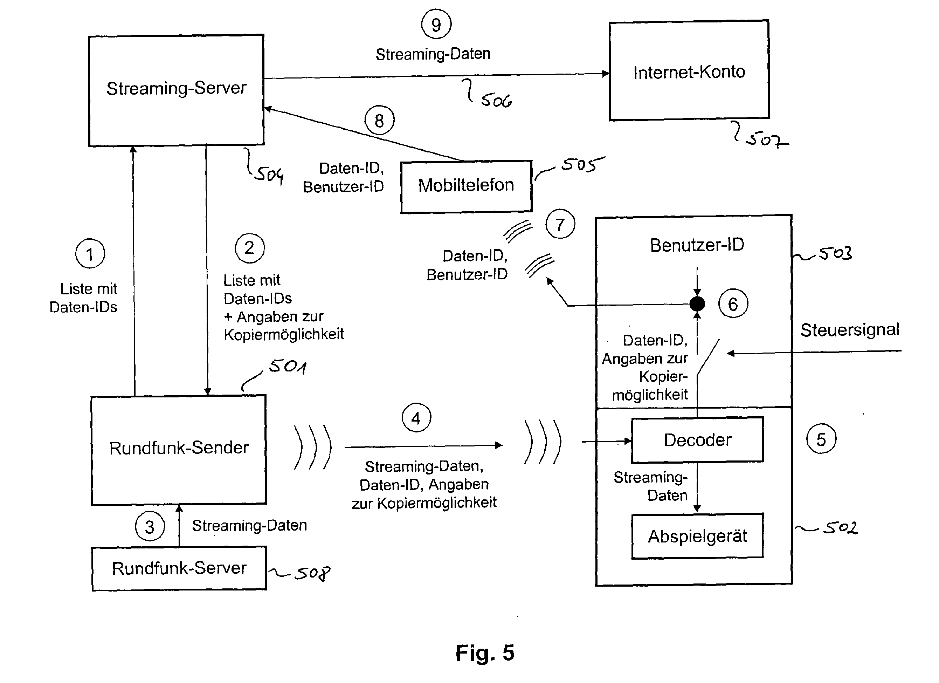

Fig. 5 zeigt ein Blockschaltbild mit der Abfolge der einzelnen Verfahrensschritte gemäß dem zweiten Ausführungsbeispiel des erfindungsgemäßen Systems. In einem ersten Schritt (1) übermittelt der Rundfunk-Sender 501 dem Streaming-Server 504 eine Liste mit von in Zukunft auszusendenden Streaming-Daten. Aufgrund der eindeutigen Adressierung der Streaming-Daten durch die jeweiligen Daten-IDs ist es ausreichend, dabei lediglich eine Liste mit den entsprechenden Daten-IDs zu übermitteln. Nachdem der Streaming-Server 504 für alle Streaming-Daten die Kopiermöglichkeit überprüft hat, sendet er in einem zweiten Schritt (2) die Liste mit den Daten-IDs an den Rundfunk-Sender 501 zurück, wobei die Liste mit Angaben zur Kopiermöglichkeit der einzelnen Streaming-Daten vervollständigt wurde. In einem dritten Schritt (3) lädt der Rundfunk-Sender 501 die auszusendenden Streaming-Daten von einem Rundfunk-Server 508 herunter. Das Verbreiten der Streaming-Daten durch den Rundfunk-Sender 501 stellt den vierten Schritt (4) dar. Erfindungsgemäß werden dabei die Streaming-Daten gleichzeitig mit den jeweiligen Daten-IDs sowie den jeweiligen Angaben zur Kopiermöglichkeit übertragen. Der Rundfunk-Empfänger 502 empfängt die gesendeten Daten, wobei in einem fünften Schritt (5) die Aufbereitung der empfangenen Daten beispielsweise nach dem gemäß Fig. 1 beschriebenen DAB-Standard erfolgen kann. Als Ergebnis werden die Streaming-Daten direkt an ein entsprechendes Abspielgerät geleitet und die jeweiligen Daten-IDs mit den Angaben zur Kopiermöglichkeit an die Steuereinheit 503 gegeben. Falls ein Steuersignal vorliegt, erzeugt eine nicht weiter dargestellte Befehlseinheit in einem sechsten Schritt (6) einen Kopierbefehl. Dabei wird die entsprechende Daten-ID mit einer Befehls-ID zu einem Kopierbefehl kombiniert, der in den Schritten sieben (7) und acht (8) über ein Mobiltelefon 505 an den Streaming-Server 504 übermittelt wird. Nachdem der Streaming-Server 504 aufgrund der in dem Kopierbefehl enthaltenen Daten-ID die gewünschten Streaming-Daten adressiert hat, sendet er eine Kopie dieser Streaming-Daten in einem neunten Schritt (9) an das Internet-Konto des Benutzers, das aufgrund der Befehls-ID ermittelt wurde.

## Patentansprüche

1. System zum Kopieren von auf einem Streaming-Server abgespeicherten Streaming-Daten, die jeweils anhand einer zugehörigen Daten-ID adressierbar sind,
mit einem Rundfunk-Sender zum Aussenden von Streaming-Daten zusammen mit der jeweils zugehörigen Daten-ID,
mit einem Rundfunk-Empfänger zum Empfangen der von dem Rundfunk-Sender ausgesendeten Streaming-Daten einschließlich der jeweils zugehörigen Daten-ID, und
mit einer Steuereinheit,
wobei die Steuereinheit eine erste Schnittstelle zum Rundfunk-Empfänger, eine zweite Schnittstelle zum Streaming-Server und eine Befehlseinheit zum Erzeugen eines Kopierbefehls umfasst, und
wobei die Befehlseinheit bei Vorliegen eines Steuersignals einen Kopierbefehl auf der Grundlage einer dem Steuersignal zugeordneten und über die erste Schnittstelle übermittelten Daten-ID sowie auf der Grundlage einer der Befehlseinheit zugeführten Befehls-ID erzeugt und den auf diese Weise erzeugten Kopierbefehl über die zweite Schnittstelle zum Starten eines Kopiervorgangs an den Streaming-Server übermittelt.

2. System nach Anspruch 1, **dadurch gekennzeichnet, dass** der Rundfunk-Sender auszusendende Streaming-Daten von dem Streaming-Server herunterlädt.

3. System nach Anspruch 1, **dadurch gekennzeichnet, dass** der Rundfunk-Sender auszusendende Streaming-Daten von einem von dem Streaming-Server unabhängig betriebenen Rundfunk-Server herunterlädt.

4. System nach einem der Ansprüche 1 - 3, **dadurch gekennzeichnet, dass** die Streaming-Daten aus DAB-Daten bestehen.

5. System nach Anspruch 4, **dadurch gekennzeichnet, dass** der Rundfunk-Empfänger aus einem digitalen Radio mit einem DAB-Dekoder besteht.

6. System nach Anspruch 5, **dadurch gekennzeichnet, dass** die Steuereinheit in dem digitalen Radio integriert ist, wobei die erste Schnittstelle mit dem DAB-Dekoder und die zweite Schnittstelle über eine Blue-Tooth-Verbindung mit einem Mobiltelefon verbunden ist.

7. System nach einem der Ansprüche 1 - 6, **dadurch gekennzeichnet, dass** das Steuersignal durch eine von einem Benutzer bedienbare Taste ausgelöst wird.

8. System nach einem der Ansprüche 1 - 6, **dadurch gekennzeichnet, dass** das Steuersignal durch eine Vergleichseinheit aufgrund vorgegebener Kriterien hinsichtlich der über die erste Schnittstelle übermittelten Daten-IDs automatisch ausgelöst wird.

9. System nach einem der Ansprüche 1 - 8, **dadurch gekennzeichnet, dass** beim Starten des Kopiervorgangs die der jeweiligen Daten-ID zugeordneten Streaming-Daten vom Streaming-Server auf ein der jeweiligen Befehls-ID zugeordnetes Internet-Konto kopiert werden.

10. Steuereinheit zum Kopieren von auf einem Streaming-Server abgespeicherten Streaming-Daten, die jeweils anhand einer zugehörigen Daten-ID adressierbar sind,
mit einer ersten Schnittstelle zu einem Rundfunk-Empfänger, über den von einem Rundfunk-Sender ausgesendete Streaming-Daten einschließlich der jeweils zugehörigen Daten-ID empfangbar sind,
mit einer zweiten Schnittstelle zum Streaming-Server und
mit einer Befehlseinheit zum Erzeugen eines Kopierbefehls,
wobei durch die Befehlseinheit bei Vorliegen eines Steuersignals ein Kopierbefehl auf der Grundlage einer dem Steuersignal zugeordneten und über die erste Schnittstelle übermittelten Daten-ID sowie auf der Grundlage einer der Befehlseinheit zugeführten
Befehls-ID erzeugbar ist und wobei der auf diese Weise erzeugte Kopierbefehl über die zweite Schnittstelle an den Streaming-Server zum Starten eines Kopiervorgangs übermittelbar ist.

11. Verfahren zum Kopieren von auf einem Streaming-Server abgespeicherten Streaming-Daten, die jeweils anhand einer zugehörigen Daten-ID adressierbar sind, mit einer Steuereinheit, die eine erste Schnittstelle zu einem Rundfunk-Empfänger, eine zweite Schnittstelle zum Streaming-Server und eine Befehlseinheit zum Erzeugen eines Kopierbefehls umfasst,
bei dem von dem Rundfunk-Sender Streaming-Daten zusammen mit der jeweils zugehörigen Daten-ID ausgesendet werden,
bei dem von dem Rundfunk-Empfänger die von dem Rundfunk-Sender ausgesendeten Streaming-Daten einschließlich der jeweils zugehörigen Daten-ID empfangen werden, und
bei dem von der Befehlseinheit bei Vorliegen eines Steuersignals ein Kopierbefehl auf der Grundlage einer dem Steuersignal zugeordneten und über die erste Schnittstelle übermittelten Daten-ID sowie auf der Grundlage einer der Befehlseinheit zugeführten
Befehls-ID erzeugt wird und der auf diese Weise erzeugte Kopierbefehl über die zweite Schnittstelle zum Starten eines Kopiervorgangs an den Streaming-Server übermittelt wird.

12. Verfahren nach Anspruch 11, **dadurch gekennzeichnet, dass** von dem Rundfunk-Sender die auszusendenden Streaming-Daten von dem Streaming-Server heruntergeladen werden.

13. Verfahren nach Anspruch 11, **dadurch gekennzeichnet, dass** von dem Rundfunk-Sender die auszusendenden Streaming-Daten von einem von dem Streaming-Server unabhängig betriebenen Rundfunk-Server heruntergeladen werden.

14. Verfahren nach einem der Ansprüche 11 - 13, **dadurch gekennzeichnet, dass** die Streaming-Daten aus DAB-Daten bestehen.

15. Verfahren nach Anspruch 14, **dadurch gekennzeichnet, dass** der Rundfunk-Empfänger aus einem digitalen Radio mit einem DAB-Dekoder besteht.

16. Verfahren nach Anspruch 15, **dadurch gekennzeichnet, dass** die Steuereinheit in dem digitalen Radio integriert ist, wobei die erste Schnittstelle mit dem DAB-Dekoder und die zweite Schnittstelle über eine Blue-Tooth-Verbindung mit einem Mobiltelefon verbunden ist.

17. Verfahren nach einem der Ansprüche 11 - 16, **dadurch gekennzeichnet, dass** das Steuersignal durch eine von einem Benutzer bedienbare Taste ausgelöst wird.

18. Verfahren nach einem der Ansprüche 11 - 16, **dadurch gekennzeichnet, dass** das Steuersignal durch eine Vergleichseinheit aufgrund vorgegebener Kriterien hinsichtlich der über die erste Schnittstelle übermittelten Daten-IDs automatisch ausgelöst wird.

19. Verfahren nach einem der Ansprüche 11 - 18, **dadurch gekennzeichnet, dass** beim Starten des Kopiervorgangs die der jeweiligen Daten-ID zugeordneten Streaming-Daten vom Streaming-Server auf ein der jeweiligen Befehls-ID zugeordnetes Internet-Konto kopiert werden.
